# EUROPÄISCHE PATENTSCHRIFT

(11) **EP 1 224 093 B1**
(45) Veröffentlichungstag und Bekanntmachung des Hinweises auf die Patenterteilung: **02.08.2006**
(21) Anmeldenummer: 01969633.5
(22) Anmeldetag: 23.08.2001
(51) Int. Cl.: B60N 2/04, B60N 2/16, B60N 2/18

(54) **VERSTELLVORRICHTUNG FÜR DIE HÖHEN- UND LÄNGSPOSITION SOWIE DIE NEIGUNG EINES FAHRZEUGSITZES**
ADJUSTING DEVICE FOR ADJUSTING THE HEIGHT AND LONGITUDINAL POSITION AS WELL AS THE INCLINATION OF A VEHICLE SEAT
DISPOSITIF D'AJUSTEMENT POUR POSITION EN HAUTEUR ET EN LONGUEUR ET INCLINAISON D'UN SIEGE DE VEHICULE

(30) Priorität: 05.09.2000 DE 20015299 U; 30.01.2001 DE 20101529 U
(43) Veröffentlichungstag der Anmeldung: 24.07.2002
(73) Patentinhaber: Johnson Controls GmbH, 51399 Burscheid (DE)
(72) Erfinder: Schmale, Uwe, 42499 Hückeswagen (DE)
(74) Vertreter: Kutzenberger, Helga
(86) Internationale Anmeldenummer: PCT/EP2001/009732
(87) Internationale Veröffentlichungsnummer: WO 2002/020303

(56) Entgegenhaltungen:
- EP-A- 0 235 793
- EP-A- 0 445 528
- DE-A- 2 527 047
- DE-A- 19 758 237
- US-A- 2 942 647
- US-A- 3 022 035
- US-A- 4 128 225
- US-A- 5 979 985
- PATENT ABSTRACTS OF JAPAN vol. 006, no. 043 (M-117), 17. März 1982 (1982-03-17) & JP 56 157634 A (TOYO SHEET:KK), 4. Dezember 1981 (1981-12-04)

## Beschreibung

Die Erfindung betrifft eine Vorrichtung zum Verstellen der Höhen- und Längsposition sowie der Neigung eines schwenkbaren Sitzteiles eines Fahrzeugsitzes relativ zu einer Bodenstruktur des Fahrzeugs, mit einem Getriebe, das einen aus mindestens einem Gelenkviereck gebildeten Getriebeteil umfaßt, der eine Basis, zwei Schwingen und eine Koppel aufweist, wobei die Basis in einer im wesentlichen zu einer Sitzlängsachse parallel verlaufenden Ebene angeordnet ist und die Schwingen um im wesentlichen parallel zu einer Sitzquerachse verlaufende Drehachsen verschwenkbar sind. Des weiteren betrifft die Erfindung einen Fahrzeugsitz mit einer derartigen Vorrichtung.

Um verschiedenen Benutzern eines Fahrzeugsitzes, insbesondere den Fahrzeugführern eines Kraftfahrzeugs, jeweils eine optimale Sitzposition zu ermöglichen, ist das Verstellen der Höhen- und Längsposition sowie der Neigung des Fahrzeugsitzes relativ zum Fahrzeugboden unerläßlich.

In einem Fahrzeugkoordinatensystem ist eine Kurve spezifisch für jedes Fahrzeug definiert, auf der sich der mensch- und sitzbezogene, sogenannte Hüftpunkt bewegen darf, damit optimale Bedingungen hinsichtlich Erfassen des Lenkrades, Erreichen der Schalter, Bedienung der Fußpedale, Sicht aus den Fenstern und anderes mehr gewährleistet sind. Als Hüftpunkt wird das Hüftgelenk bezeichnet, das aus dem Lager des Oberschenkelknochens im Beckenknochen gebildet wird. Der Hüftpunkt bildet somit den Punkt, der die Position des Fahrzeuginsassen im Fahrzeugkoordinatensystem bestimmt, wenn er auf dem Fahrzeugsitz platzgenommen hat. Hüftpunkt und Fahrzeugsitz sind im Zusammenhang zu sehen und für die Entwicklung einer Sitzverstellvorrichtung maßgebend. Beispielsweise sinkt auf einem weichen Sitzpolster ein schwerer Mensch tiefer als ein leichter Mensch ein, bzw. führen verschiedene Härtegrade der Polster zu unterschiedlichen Einsinktiefen desselben Benutzers.

Der Hüftpunkt des Fahrzeuglenkers sollte sich stets auf der relativ zum Fahrzeugkoordinatensystem angeordneten Kurve (Hüftpunktweg) bewegen. Diese Kurve stellt den Weg des Hüftpunktes von im Kraftfahrzeugbau gebräuchlichen Normmenschen, sogenannten Perzentilen, dar, wenn diese optimal im Fahrzeug positioniert sind. Hierbei ist festzustellen, daß der Hüftpunkt beispielsweise einer kleinen Frau (5%-Frau-Perzentil) in Blickrichtung (meist gleichzeitig Fahrtrichtung) der Frau vorne oben und der Hüftpunkt eines großen Mannes (95%-Mann-Perzentil) hingegen hinten unten positioniert werden muß. Eine Vielzahl abweichender Hüftpunktwege erzeugt ein sogenanntes Hüftpunktfeld (H-Punktfeld), das um den Hüftpunktweg der Normmenschen angeordnet ist.

Zusätzlich zu den unterschiedlichen Größen der Menschen ergibt sich, da jeder Mensch von unterschiedlicher Gestalt ist, in Bezug auf die vorgenannten Normmenschen eine grobe Einteilung in sogenannte Sitzriesen und Sitzzwerge. Sitzriesen weisen einen großen Oberbau mit kurzen Beinen, Sitzzwerge dagegen einen kurzen Oberkörper mit langen Beinen auf. Somit ergibt sich bei den meisten Personen zwangsläufig eine Abweichung vom Hüftpunktweg des Normmenschen.

Aufgrund der Notwendigkeit, den Hüftpunkt stets im Hüftpunktfeld zu positionieren, sind Sitzverstellvorrichtungen erforderlich, wie sie beispielsweise in den Veröffentlichungen DE 32 22 386 A1, DE 40 10 451 C2 und EP 0 445 528 A2 offenbart sind.

Die DE 32 22 386 A1 zeigt eine Verstellvorrichtung zur Einstellung eines Hüftpunktweges, bei der die Höhenverstellung mittels einer schlefen Ebene realisiert wird. In Kombination mit der schiefen Ebene kann mit der durch diese getragenen Ungsverstellvorrichtung der Sitz entsprechend positioniert werden.

Aus der DE 40 10 451 C2 und der EP 0 445 528 A2 sind Vorrichtungen der eingangs genannten Art bekannt, die zur Verstellung der Sitzposition ein Viergelenkgetriebe und eine zwischen dem Siizuntergestell und dem Fahrzeugboden angeordnete Verschlebevorrichtung für die Längsverstellung umfassen. Bei diesen bekannten Verstellvorrichtungen wird die Verstellung der Längsposition des Fahrzeugsitzes relativ zum Fahrzeugboden mit Hitfe eines Führungsschienenpaares mit allen bekannten Nachteilen, wie großer Raumbedarf, Verkantungsanfälligkeit usw., bewerkstelligt.

Der Erfindung liegt die Aufgabe zugrunde, eine Vorrichtung sowie einen Fahrzeugsitz mit einer Vorrichtung zum Verstellen der Höhen- und Längsposition sowie der Neigung eines Fahrzeugsitzes relativ zum Fahrzeugboden der eingangs genannten Art zu schaffen, wobei eine Verstellung des Fahrzeugsitzes ohne die Verwendung von Längsfuhrungsschianen möglich sein soll. Dabei soll insbesondere die Positionierung des Hüftpunktes auf einer frei festlegbaren Strecke von mindestens etwa 200 mm (Hüftpunktweg) sowie bei von Normmaßen abweichenden Personen eine Korrektur der Position des Hüftpunktes innerhalb eines fährzeugspezifischen Hüftpunktfeldes möglich sein. Die Versteilvorrichtung soll mit Fahrzeugsitzen, die warkzeuglos mittels spezieller, bekannter Verankerungseinrichtungen in das Fahrzeug ein- bzw, aus dem Fahrzeug ausgebaut werden können, verwendbar sein.

Erfindungsgemäß wird dies dadurch erreicht, daß das Getriebe zwei jeweils aus mindestens einem Gelenkviereck gebildete Getriebeteile umfaßt, die jewelis eine Basis, zwei Schwingen und eine Koppel aufweisen, wobei die Basis des ersten Getriebeteiles gegenüber der Bodenstruktur des Fahrzeugs festlegbar ist, die Koppel des ersten Getriebeteiles die Basis des zweiten Getriebeteiles bildet, die Koppel des zweiten Getriebeteiles gegenüber dem Sitzteil festgelegt ist und eine Schwinge des zweiten Getriebeteiles mit einer Schwinge des ersten Getriebeteiles zwangsläufig kinematisch gekoppelt ist, um den Hüftpunkt des Fahrzeuginsassen optimal zu positionieren.

Die erfindungsgemäße Vorrichtung kann durch die Verwendung eines Getriebes mit den vorstehend genannten Eigenschaften vorteilhafterweise derart ausgebildet werden, daß das Sitzteil einen gewünschten voreinstellbaren Hüftpunktweg zurücklegt. Dieser Weg entspricht einer sogenannten Koppelpunktbahn, die das Sitzteil beim Verstellen der erfindungsgemäßen Vorrichtung ausführt. Insbesondere können dabei alle Punkte auf dem gegenüber der Koppel des zweiten Getriebeteiles festgelegten Sitzteil eines erfindungsgemäßen Fahrzeugsitzes, der eine solche erfindungsgemäße Vorrichtung enthält, im Querschnitt gesehen bei einem Verstellen des ersten Getriebeteiles, vorzugsweise bei einem Verschwenken einer Schwinge des ersten Getriebeteiles,
- eine geschlossene einteilige Bahn,
- eine Bahn von mindestens etwa 200 mm Länge bzw.
- eine parallel zu einer Sitzlängsachse eine in Blickrichtung eines Sitzbenutzers ansteigende Bahn
ausführen, d.h. einen gewünschten Hüftpunktweg festlegen, ohne daß dazu eine Schienenführung des Sitzes notwendig wäre.

Weitere vorteilhafte Ausgestaltungsmerkmale der Erfindung sind in den Unteransprüchen sowie der folgenden Beschreibung enthalten.

Anhand mehrerer in der Zeichnung veranschaulichter, bevorzugter Ausführungsbeispiele soll im folgenden die Erfindung genauer erläutert werden. Es zeigen:
- Fig. 1: in schematisierter Seitenansicht und in verschiedenen Positionen, einen erfindungsgemäßen Kraftfahrzeugsitz mit einer ersten Ausführung einer erfindungsgemäßen Vorrichtung zum Verstellen der Höhen- und Längsposition sowie der Neigung eines schwenkbaren Sitzteiles,
- Fig. 2: in noch stärker schematisierter Seitenansicht einen erfindungsgemäßen Kraftfahrzeugsitz mit einer zweiten Ausführung einer erfindungsgemäßen Vorrichtung,
- Fig. 3: in einer Fig. 2 entsprechenden Ansicht einen erfindungsgemäßen Kraftfahrzeugsitz mit einer dritten Ausführung einer erfindungsgemäßen Vorrichtung,
- Fig. 4: in einer Fig. 2 und 3 entsprechenden Ansicht einen erfindungsgemäßen Kraftfahrzeugsitz mit einer vierten Ausführung einer erfindungsgemäßen Vorrichtung,
- Fig. 5: in einer den vorangegangenen Figuren entsprechenden Ansicht einen erfindungsgemäßen Kraftfahrzeugsitz mit einer fünften Ausführung einer erfindungsgemäßen Vorrichtung,
- Fig. 6: in einer den vorangegangenen Figuren entsprechenden Ansicht einen erfindungsgemäßen Kraftfahrzeugsitz mit einer sechsten Ausführung einer erfindungsgemäßen Vorrichtung,
- Fig. 7: in einer den vorangegangenen Figuren entsprechenden Ansicht einen erfindungsgemäßen Kraftfahrzeugsitz mit einer siebenten Ausführung einer erfindungsgemäßen Vorrichtung.

In den verschiedenen Figuren der Zeichnung sind gleiche und bzw. teilweise auch einander entsprechende Teile mit denselben Bezugszeichen versehen und werden daher in der Regel auch jeweils nur einmal beschrieben.

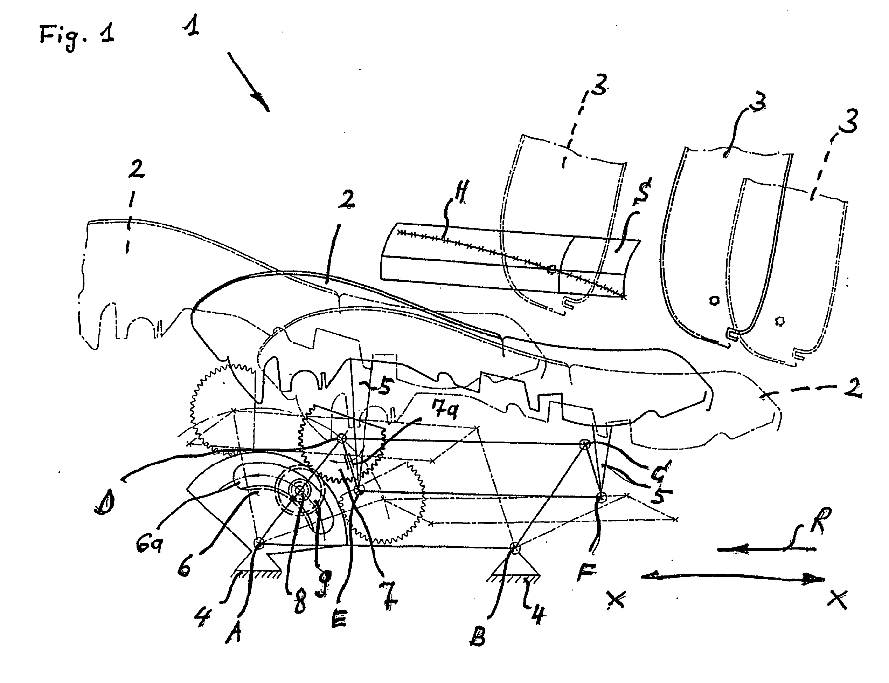

Wie zunächst Fig. 1 zeigt, besteht ein erfindungsgemäßer Kraftfahrzeugsitz 1 aus einem verschwenkbaren Sitzteil 2, und vorzugsweise aus einer Rückenlehne 3. Der erfindungsgemäße Kraftfahrzeugsitz 1 weist eine erfindungsgemäße Vorrichtung zum Verstellen der Höhen- und Längsposition sowie der Neigung des schwenkbaren Sitzteiles 2 auf, die als ganzes nicht näher bezeichnet ist.

Diese Vorrichtung weist ein aus drei Getriebeteilen bestehendes Getriebe auf. Ein erster Getriebeteil ist dabei aus mindestens einem Gelenkviereck ABCD gebildet und umfaßt eine Basis AB, zwei Schwingen AD, BC und eine Koppel CD. Die Basis AB ist dabei in einer im wesentlichen zu einer Sitzlängsachse X-X parallel verlaufenden Ebene angeordnet, und die Schwingen AD, BC sind um im wesentlichen parallel zu einer Sitzquerachse verlaufende Drehachsen verschwenkbar. (Die nicht dargestellte Sitzquerachse verläuft dabei senkrecht zur Sitzlängsachse X-X.) Die Basis AB des ersten Getriebeteiles ist gegenüber dem Fahrzeugkörper, insbesondere gegenüber einer Bodenstruktur 4 des Fahrzeugs, festgelegt, vorzugsweise durch diese Bodenstruktur 4 selbst gebildet. Schienen sind zur Sitzverstellung vorteilhafterweise nicht notwendig.

Außer dem ersten Gelenkviereck ABCD umfaßt das Getriebe einen zweiten Getriebeteil, der ebenfalls aus mindestens einem Gelenkviereck CDEF gebildet ist und eine Basis CD, zwei Schwingen DE, CF und eine Koppel EF aufweist. Wie der Zeichnung zu entnehmen ist, ist dabei die Koppel CD des ersten Getriebeteiles mit der Basis CD des zweiten Getriebeteiles identisch, während die Koppel EF des zweiten Getriebeteiles gegenüber dem Sitzteil 2 an Sitzabstützungen 5 festgelegt ist. Eine erste Schwinge DE des zweiten Getriebeteiles ist mit einer ersten Schwinge AD des ersten Getriebeteiles zwangsläufig kinematisch gekoppelt, was im folgenden noch genauer beschrieben ist. Das Gelenkviereck ABCD des ersten Getriebeteiles und das Gelenkviereck CDEF des zweiten Getriebeteiles liegen im wesentlichen in einer Ebene. Die Gelenkpunkte der beiden Getriebeteile sind dabei die der zeichnerischen Darstellung zu entnehmenden Punkte A, B, C, D, E, F.

Sowohl das erste Gelenkviereck ABCD, als auch das zweite Gelenkviereck CDEF bilden vorzugsweise Parallelogramme, wodurch ihnen jeweils bestimmte vorteilhafte Laufeigenschaften verliehen werden, wie diese dem Fachmann von einem Parallelkurbelgetriebe bekannt sind. So ist es mit einem Parallelkurbelgetriebe beispielsweise möglich, eine ebene Figur maßstabsgerecht zu vergrößern oder zu verkleinern. Allerdings handelt es sich bei den Viereckseiten AD und BC sowie ED und CF der beiden Gelenkvierecke ABCD und CDEF nicht um Kurbeln, sondern - wie erwähnt - um Schwingen, da diese Getriebeteile keinen vollen Umlauf ausführen können.

Im Sinne einer hohen Stabilität und gleichmäßigen Wirkung auf das Sitzteil 2 können der erste Getriebeteil und der zweite Getriebeteil bevorzugt jeweils zwei beidseitig des Sitzteiles angeordnete jeweils identische Gelenkvierecke ABCD, CDEF umfassen, wobei die jeweiligen, in der Zeichnung nur schematisch dargestellten Schwingen AD, BC sowie DE, CF als beiderseits am Sitzteil 2 angeordnete Hebelpaare gebildet sind. Entsprechend sind die Koppeln CD des ersten Getriebeteiles bzw. die Basen CD des zweiten Getriebeteiles jeweils durch beiderseits am Sitzteil angeordnete Koppelstangen gebildet.

Die zwangsläufige kinematische Kopplung der ersten Schwinge DE des zweiten Getriebeteiles mit der ersten Schwinge AD des ersten Getriebeteiles wird über einen dritten Getriebeteil realisiert. Dieser dritte Getriebeteil ist als ein Planetengetriebe mit paarweise miteinander kämmenden Zahnrädern 6, 7, 8, 9 oder zumindest Zahnradsegmenten ausgebildet, die durch einen umlaufenden Steg zusammengehalten werden, wobei der umlaufende Steg durch die erste Schwinge AD des ersten Getriebeteiles gebildet ist. Der dritte Getriebeteil ist als offenes Außengetriebe ausgebildet, seine Zahnräder 6, 7, 8, 9 oder zumindest Zahnradsegmente sind als Stirnräder ausgeführt.

Die Drehachse eines ersten Zahnrades 6 oder zumindest Zahnsegmentes des dritten Getriebeteiles verläuft durch den an der Bodenstruktur 4 festgelegten Anlenkpunkt A der ersten Schwinge AD des ersten Getriebeteiles an der Basis AB des ersten Getriebeteiles. Das erste Zahnrad 6 oder zumindest Zahnsegment ist dabei gegenüber der Bodenstruktur 4 des Fahrzeugs zumindest drehfest festgelegt.

Die Drehachse eines zweiten Zahnrades 7 oder zumindest Zahnsegmentes des dritten Getriebeteiles verläuft durch den beweglichen Anlenkpunkt D der ersten Schwinge AD des ersten Getriebeteiles an der Koppel CD des ersten Getriebeteiles bzw. der Basis CD des zweiten Getriebeteiles.

Ein drittes, als Ritzel, d.h. mit einem kleineren Durchmesser als alle übrigen Zahnräder 6, 7, 9, ausgebildetes Zahnrad 8 kämmt mit dem ersten Zahnrad 6 oder zumindest Zahnsegment des dritten Getriebeteiles und ist koaxial und drehfest zu einem vierten Zahnrad 9 angeordnet, welches mit dem zweiten Zahnrad 7 oder zumindest Zahnsegment kämmt. Für das dritte Zahnrad 8 ist am ersten Zahnrad bzw. Zahnsegment eine langlochartige Führung 6a ausgebildet, wodurch eine Stabilisierung des dritten Getriebes erreicht wird.

Der dritte Getriebeteil umfaßt somit vier Zahnräder 6, 7, 8, 9 oder zumindest Zahnradsegmente, wobei zwei Zahnräder 8, 9 unterschiedlicher Größe koaxial und drehfest zueinander angeordnet sind und jedes dieser beiden Zahnräder 8, 9 mit einem der beiden übrigen Zahnräder 6, 7 oder zumindest Zahnradsegmente kämmt.

Hinsichtlich der zwangsläufigen kinematischen Kopplung, die der erste Getriebeteil und der zweite Getriebeteil mittels des dritten Getriebeteils aufweisen, ist noch zu ergänzen, daß diese des weiteren dadurch zustande kommt, daß das zweite Zahnrad 7 des dritten Getriebeteiles, drehfest mit der ersten Schwinge DE des zweiten Getriebeteiles verbunden ist, so daß diese in Drehrichtung des Zahnrads 7 mitgeführt (geschwenkt) wird. In radialer Richtung ist die Schwinge DE gegenüber dem Zahnrad 7 jedoch beweglich. Die Mitnahme erfolgt - wie Fig. 1 zeigt - über ein Mitnahme- und Führungselement 7a.

Zum Verstellen der erfindungsgemäßen Vorrichtung kann für eines der Zahnräder, vorzugsweise für das als Ritzel ausgebildete Zahnrad 8, ein Drehantrieb vorgesehen sein (nicht dargestellt). Dieser kann beispielsweise als zentrisch auf die Drehachse des Zahnrads 8 aufgesetzter Schrittschaltmechanismus oder als auf die Drehachse wirkender elektromotorischer Antrieb ausgebildet sein.

Alternativ ist es auch möglich, unmittelbar einen Schwenkantrieb für die erste Schwinge AD des ersten Getriebeteiles vorzusehen, wobei aber dann ein Verriegelungsmechanismus erforderlich ist, um die gewünschte Position zu fixieren.

Die erfindungsgemäße Verstellvorrichtung arbeitet folgendermaßen: Wird das als Ritzel ausgebildete Zahnrad 8 (ausgehend von der in Fig. 1 mit fetten Linien dargestellten Position des erfindungsgemäßen Sitzes) entgegen dem Uhrzeigersinn gedreht, so versetzt das mit ihm drehfest verbundene Zahnrad 9, das im Endpunkt der ersten Schwinge AD des ersten Getriebeteiles gelagerte Zahnrad 7 in eine dem Uhrzeigersinn folgende Drehrichtung. Dabei werden gleichzeitig die erste Schwinge AD des ersten Getriebeteiles in eine dem Uhrzeigersinn entgegengesetzte Drehrichtung (um A) und die erste Schwinge DE des zweiten Getriebeteiles, die fest mit dem im Endpunkt D der ersten Schwinge AD des ersten Getriebeteiles gelagerten Zahnrad 7 verbunden ist, im Uhrzeigersinn (um D) bewegt. Durch diese Bewegung wird die Koppel EF des zweiten Getriebeteiles, die das Sitzteil 2 trägt, in Längsrichtung X-X des Sitzes 1 und zwar insbesondere in Blickrichtung R eines Sitzbenutzers und gleichzeitig nach oben bewegt, wodurch es die im linken Teil der Fig. 1 mit dünnen Linien gezeichnete Position einnimmt. Umgekehrt bewegt sich das Sitzteil 2 bei einer gegenläufigen Bewegung des als Ritzel ausgebildeten Zahnrads 8 in die in Fig. 1 rechts mit dünnen Linien dargestellte Position nach unten entgegen der Blickrichtung R eines Sitzbenutzers. Die Blickrichtung R entspricht in der Regel der Fahrtrichtung des Fahrzeugs, es ist aber auch denkbar, einen Fahrzeugsitz mit einer erfindungsgemäßen Vorrichtung beispielsweise quer zu Fahrtrichtung in einem Fahrzeug zu positionieren.

Insofern das Sitzteil 2 ein starrer Körper ist, wird die beschriebene und figürlich dargestellte Bewegung von allen Punkten auf dem gegenüber der Koppel EF des zweiten Getriebeteiles festgelegten Sitzteiles 2 (im Querschnitt gesehen) ausgeführt. Eine solche Kurve wird bei den verwendeten Getriebeteilen als Koppelpunktbahn bezeichnet. Das Getriebe, d.h. die einzelnen Bestandteile des ersten bis dritten Getriebeteiles können nun mit Vorteil derart abgestimmt aufeinander dimensioniert werden, daß sich bei einem Verstellen des ersten Getriebeteiles, insbesondere bei einem Verschwenken der ersten Schwinge AD des ersten Getriebeteiles, eine einteilige, geschlossene, vorzugsweise schleifenfreie, Koppelpunktbahn ergibt. Des weiteren kann die Dimensionierung so erfolgen, daß die Koppelpunktbahn mindestens etwa eine Länge von etwa 200 mm ausführen und - wie dargestellt - parallel zur Sitzlängsachse X-X in Blickrichtung R eines Sitzbenutzers ansteigen kann. Ein ebenfalls in Fig. 1 schematisch eingezeichneter Hüftpunktweg H eines definiert von der Oberfläche des Sitzteiles beabstandeten Punktes ergibt sich dann als äquidistante Linie zu dieser Koppelpunktbahn.

Damit abweichend von der beschriebenen Kurve, die mit Vorzug für die eingangs beschriebenen Normmenschen ausgelegt sein kann, auch ein Hüftpunktspektrum (Feld S in Fig. 1) der von der Norm abweichenden Personen (Sitzriesen, Sitzzwerge) bedient werden kann, kann das Mitnahme- und Führungselement 7a für die Schwinge DE am zweiten Zahnrad 7 um den Punkt D verstellbar (verschwenkbar) gestaltet sein. Dies kann in der einfachsten Form dadurch geschehen, daß das Mitnahme- und Führungselement 7a mit dem Zahnrad 7 über eine Rastung, einen Indexstift oder eine andere geeignete formschlüssige Verbindung verbunden ist, wodurch unterschiedliche (diskrete) Grundstellungen des Mitnahme- und Führungselementes 7a gegenüber dem Zahnrad 7 festlegbar sind. Mit dieser Maßnahme kann die Koppel EF des zweiten Getriebeteils (und damit das Sitzteil 2) zusätzlich verlagert werden, wobei der Endpunkt des Hüftpunktweges H z.B. in den vorderen unteren Bereich des Hüftpunktfeldes S bewegt wird. Außerdem besteht auch die Möglichkeit, den hinteren Teil des Sitzteiles 2 bei Bedarf anzuheben.

Eine weitere, komfortablere Möglichkeit, um das Hüftpunktspektrum S der von der Norm abweichenden Personen (Sitzriesen, Sitzzwerge) zu bedienen, besteht darin, daß ein weiterer Antrieb mit ähnlicher Gestaltung wie der des ersten Zahnrades oder Zahnsegmentes 6 mit seiner Langlochführung 6a für das Ritzel 8 vorgesehen ist. Hierbei kann das Mitnahme- und Führungselement 7a entsprechend den Bedürfnissen des Sitzbenutzers durch Handantrieb (mit einer entsprechenden Hemmeinrichtung gegen Rückstellung) oder durch einen elektromotorischen Ritzelantrieb stufenlos um den Lagerpunkt D bewegt werden.

Die Erfindung eröffnet somit Verstellmöglichkeiten des Fahrzeugsitzes 1 mit einer Vielzahl von möglichen einstellbaren Sitzpositionen des Sitzteiles 2 und ist auch für eine Kopplung mit einer Verstellvorrichtung für die Rückenlehne 3 geeignet. Beispielsweise kann zur Einstellung der Neigung der Rückenlehne 3 ein elektromotorischer Antrieb vorgesehen sein, der durch einen von Hand zu betätigten Schalter in Betrieb gesetzt werden kann.

Die erfindungsgemäße Vorrichtung ermöglicht ein einfaches und bequemes Verstellen der Höhen- und Längsposition sowie der Neigung des Fahrzeugsitzes 2 relativ zum Fahrzeugboden 4 und ist bei Fahrzeugsitzen, die werkzeuglos mittels spezieller, bekannter Verankerungseinrichtungen in das Fahrzeug ein- bzw. aus dem Fahrzeug ausgebaut werden können, verwendbar.

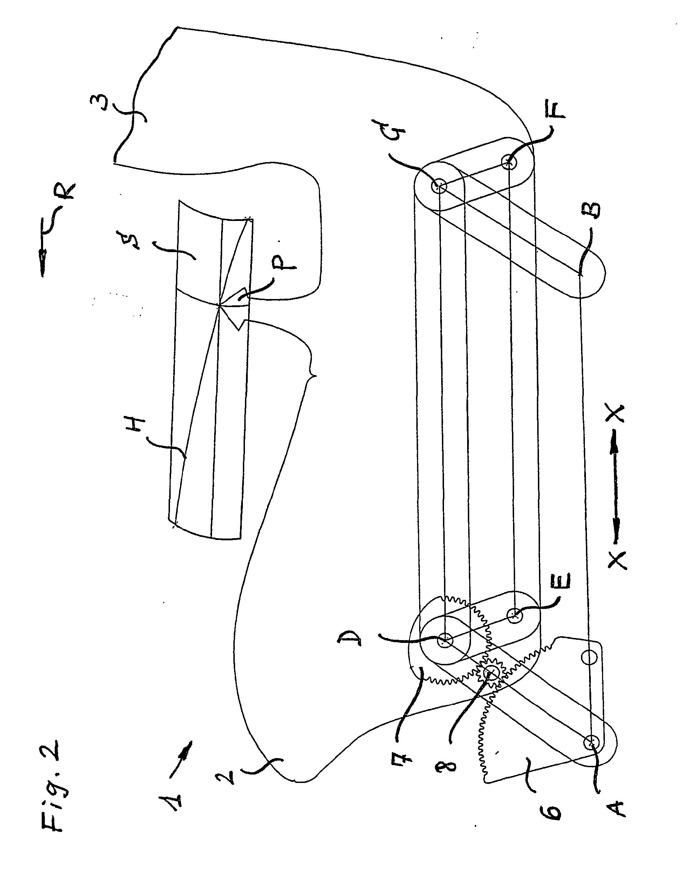

Die zeichnerischen Darstellungen (Fig. 2 bis 7) zum zweiten bis siebenten Ausführungsbeispiel der Erfindung sind gegenüber Fig. 1 insofern noch weiter schematisiert, als sie die Sitzabstützungen 5 und die Fahrzeugbodenstruktur 4 nicht zeigen. Des weiteren ist das Sitzteil 2 an seiner Oberfläche symbolisch zu einem Zeigerpfeil P ausgeformt, der auf das dargestellte Hüftpunktfeld S bzw. den Hüftpunktweg H weist.

Das in Fig. 2 dargestellte zweite Ausführungsbeispiel der Erfindung stimmt in seinem Aufbau mit dem ersten Ausführungsbeispiel überein. Im Sinne einer konstruktiv einfacheren Ausführung weist der dritte Getriebeteil dabei jedoch nur drei (nicht vier) Zahnräder 6, 7, 8 oder zumindest Zahnradsegmente auf, wobei wiederum eines der Zahnräder 8 als Ritzel, d.h. mit einem kleineren Durchmesser als die übrigen Zahnräder 6, 7, ausgebildet ist und mit den beiden übrigen Zahnrädern 6, 7 oder zumindest Zahnradsegmenten kämmt. Durch eine entsprechende Abstimmung der Zähnezahl bzw. Durchmesser der einzelnen Zahnräder 6, 7, 8 aufeinander ist es somit möglich, ein optimiertes Übersetzungsverhältnis einzustellen und so den gewünschten Bewegungsablauf zu erzielen.

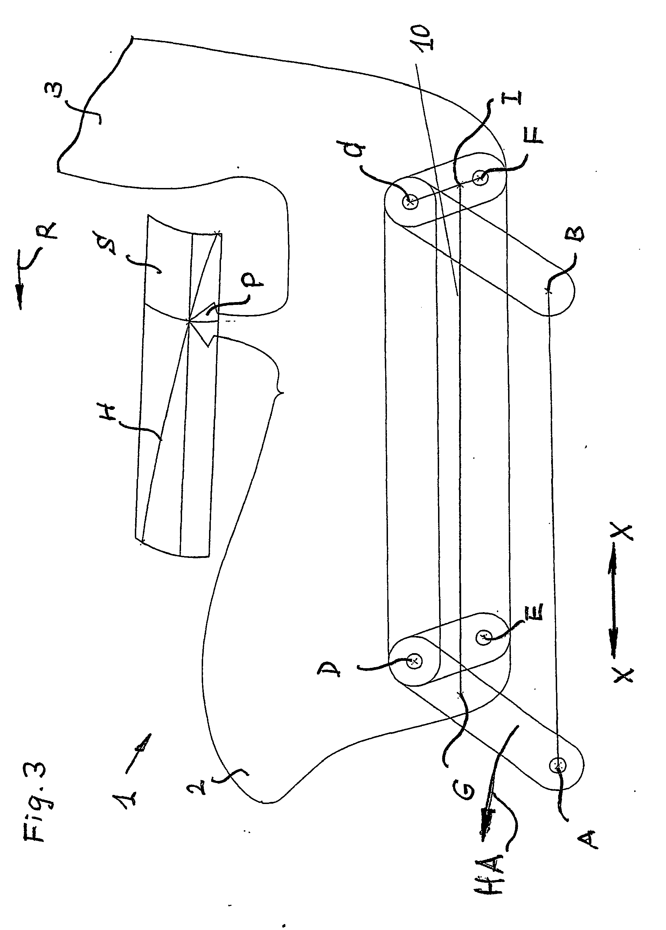

Das in Fig. 3 dargestellte dritte Ausführungsbeispiel der Erfindung stimmt in seinem Grundaufbau ebenfalls mit dem ersten (und dem zweiten) Ausführungsbeispiel überein. Ebenfalls im Sinne einer konstruktiv einfacheren Ausführung ist dabei der dritte Getriebeteil im Unterschied zu ersten beiden Ausführungen nicht als Zahnradgetriebe ausgebildet. Er umfaßt statt dessen eine zusätzliche Koppelstange 10, die die erste Schwinge AD des ersten Gelenkvierecks ABCD mit der zweiten Schwinge CF des zweiten Gelenkvierecks CDEF verbindet. Dadurch wird in diesem Fall die zwangsläufige kinematische Kopplung zwischen dem ersten und zweiten Getriebeteil herbeigeführt. Die Anlenkpunkte der Koppelstange 10 sind in Fig. 3 mit G (an der einen Schwinge AD) und I (an der anderen Schwinge CF) bezeichnet und befinden sich jeweils etwa in einem mittleren Bereich der Länge der Schwingen AD, CF.

Die Koppelstange 10, die auch als Koppelglied Gl bezeichnet werden könnte, muß dabei nicht parallel zur Basis AB bzw. zur Koppel CD des ersten Gelenkvierecks ABCD verlaufen, wie auch in allen Ausführungen die Basis AB und die Koppel CD des ersten Gelenkvierecks ABCD nicht parallel zueinander verlaufen müssen. (Gleiches gilt auch für die Schwingen AD und BC sowie in Entsprechung für das zweite Gelenkviereck CDEF.)

Es versteht sich, daß für den Fall, daß der erste Getriebeteil und der zweite Getriebeteil jeweils zwei beidseitig des Sitzteiles 2 angeordnete Gelenkvierecke ABCD; CDEF umfassen, wobei die jeweiligen Schwingen AD, BC; DE, CF als beiderseits am Sitzteil 2 angeordnete Hebelpaare gebildet sind, auch beidseitig jeweils eine derartige Koppelstange 10 vorgesehen werden kann.

Da bei dieser Ausführung kein Ritzel 8 vorgesehen ist, ist alternativ ein anderer Hauptantrieb HA vorzusehen, beispielsweise - wie bereits erwähnt - ein Schwenkantrieb für die erste Schwinge AD des ersten Getriebeteiles. Dies ist in Fig. 3 durch den mit HA bezeichneten Pfeil angedeutet.

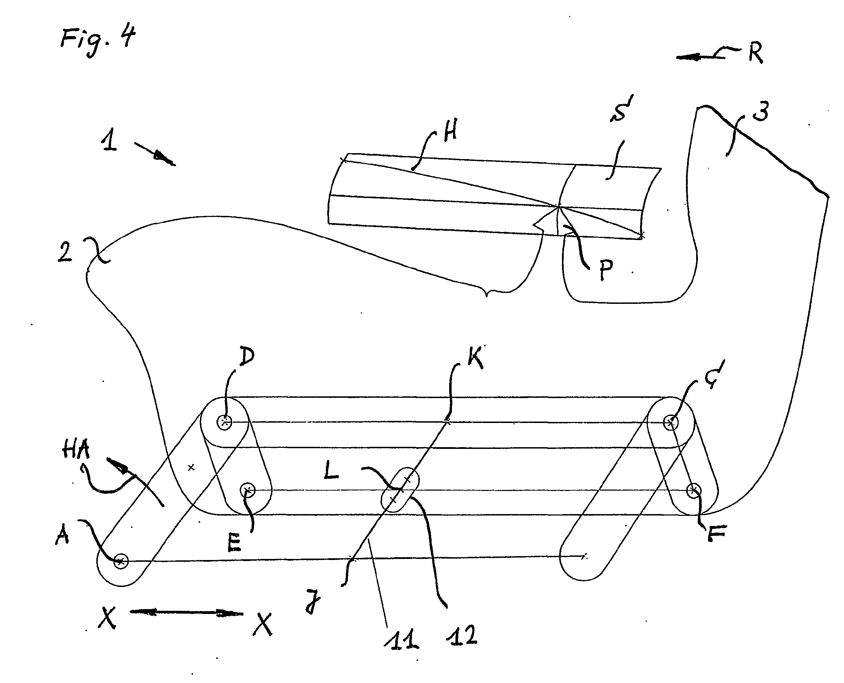

Das vierte Ausführungsbeispiel der Erfindung (Fig. 4) zeichnet sich ebenfalls dadurch aus, daß im Unterschied zu den ersten beiden Ausführungen eine vorteilhafte Vereinfachung der erfindungsgemäßen Vorrichtung dadurch erreicht wird, daß als dritter Getriebeteil kein Zahnradgetriebe, sondern wie im dritten Ausführungsbeispiel ein weiteres hebelartiges Koppelglied 11 eingesetzt wird. Im Unterschied zum dritten Ausführungsbeispiel verbindet aber dieses zusätzliches Koppelglied 11 die Basis AB (Anlenkpunkt J) des ersten Gelenkvierecks ABCD mit der Koppel CD des ersten Gelenkvierecks ABCD bzw. mit der Basis CD des zweiten Gelenkvierecks CDEF (Anlenkpunkt K). Es wirkt demnach zwar im Sinne der gewünschten kinematischen Kopplung, jedoch eigentlich als zusätzliche Schwinge JK. Die Schwinge JK bzw. 11 weist eine Kulisse 12 auf, die einerseits auf der Schwinge JK in deren Längsrichtung bewegbar aber andererseits auch mit der Koppel EF des zweiten Gelenkvierecks CDEF drehbar um einen Lagerpunkt L verbindbar ist, wodurch wiederum eine kinematische Kopplung erreicht werden kann. Wie beim dritten Ausführungsbeispiel ist auch hier ein zu dem Ritzel 8 alternativer Hauptantrieb HA vorzusehen.

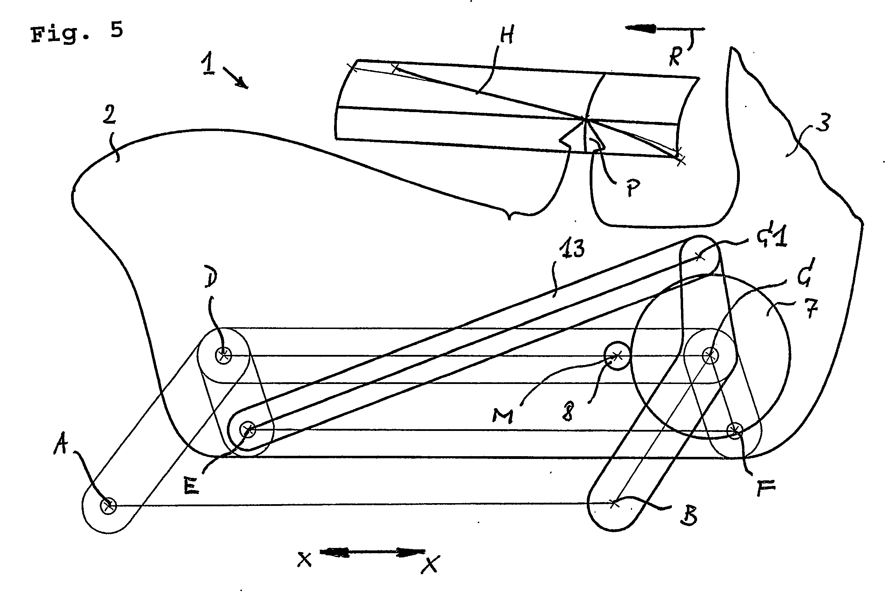

Das durch Fig. 5 veranschaulichte fünfte Ausführungsbeispiel der Erfindung kommt insbesondere dem zweiten Ausführungsbeispiel nahe, insofern es eine gegenüber dem ersten Ausführungsbeispiel verringerte Anzahl von Zahnrädern bzw. Zahnsegmenten aufweist. Bei dieser Ausführung sind jedoch nur zwei Zahnräder bzw. Zahnsegmente vorhanden, ein Ritzel 8 und ein dem zweiten Zahnrad bzw. Zahnsegment der ersten und zweiten Ausführung entsprechendes Zahnrad 7 bzw. Zahnsegment, das mit dem Ritzel 8 kämmt.

Zum Verstellen der erfindungsgemäßen Vorrichtung kann wiederum insbesondere für das als Ritzel ausgebildete Zahnrad 8, ein Drehantrieb, wie ein zentrisch auf die Drehachse des Zahnrads 8 aufgesetzter Schrittschaltmechanismus oder ein als auf die Drehachse wirkender elektromotorischer Antrieb, vorgesehen sein.

Im Unterschied zu den ersten beiden Ausführungen ist das größere Zahnrad 7 bzw. Zahnsegment bei dieser Ausführung nicht im Gelenkpunkt D, sondern im rückenlehnenseitigen Gelenkpunkt C drehbar befestigt. Das Ritzel 8 besitzt einen Drehpunkt M, der auf der Koppel CD des ersten Getriebeteiles (bzw. Basis CD des zweiten Getriebeteiles) fixiert ist. Die Schwinge BC des ersten Getriebeteiles weist gegenüber den übrigen Ausführungen eine über den Gelenkpunkt C hinausführende Verlängerung CC1 auf, die insbesondere mit der Strecke BC einen nicht näher bezeichneten stumpfen, in Blickrichtung R geöffneten Winkel einschließen kann, wie dies Fig. 5 zeigt. Der Endpunkt C1 der Verlängerung der Schwinge BC bildet bei dieser Ausführung einen ersten Anlenkpunkt für ein zusätzliches Koppelglied 13, das anderendig im vorderen Gelenkpunkt E der Koppel EF des zweiten Getriebeteiles angelenkt ist.

Durch eine entsprechende Abstimmung der Zähnezahl bzw. Durchmesser der Zahnräder 7, 8 aufeinander sowie der Länge der Verlängerung CC1 auf die Länge der Schwinge BC ist es somit möglich, ein optimiertes Übersetzungsverhältnis einzustellen und so den gewünschten Bewegungsablauf (Hüftpunktweg H) zu erzielen.

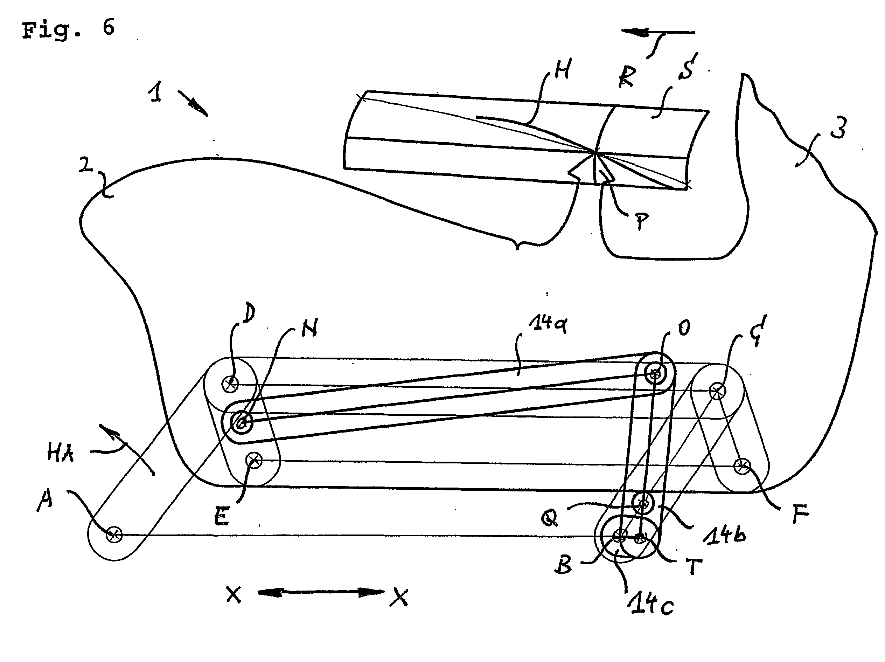

Das in Fig. 6 dargestellte sechste Ausführungsbeispiel der Erfindung weist wie die dritte und vierte Ausführung der Erfindung keine Zahnräder auf. Daher ist wie bei diesen Ausführungen ein Hauptantrieb HA notwendig, der vorzugsweise auf eine Schwinge AD des ersten Getriebeteiles wirken kann.

Die zwangsläufige kinematische Kopplung des ersten und zweiten Getriebeteiles wird durch drei hebelartige, gelenkig miteinander verbundene Koppelglieder 14a, 14b, 14c hergestellt. Das erste Koppelglied 14a ist dabei einendig an einer Schwinge DE des zweiten Gelenkvierecks CDEF angelenkt. Der Anlenkpunkt befindet sich im mittleren Bereich der Schwinge DE und ist in Fig. 6 mit N bezeichnet. Der anderendige Anlenkpunkt am Ende des zweiten Koppelgliedes 14b wird durch das Bezugszeichen O angegeben, ein weiterer Anlenkpunkt des zweiten Koppelgliedes 14b an einer Schwinge BC des ersten Gelenkvierecks ABCD mit dem Bezugszeichen Q und ein anderendiger Anlenkpunkt des zweiten Koppelgliedes 14b an einem Ende des dritten Koppelgliedes 14c mit dem Bezugszeichen T. Das dritte Koppelglied 14c ist mit seinem anderen Ende im Gelenkpunkt B des ersten Gelenkvierecks ABCD angelenkt.

Der gewünschte Bewegungsablauf (Hüftpunktweg H) wird hier durch eine entsprechende Abstimmung der Längen der einzelnen Koppelglieder 14a, 14b 14c, aufeinander und auf die Längen der Basen, Schwingen und Koppeln der beiden Gelenkvierecke ABCD, CDEF sowie durch die Lage Anlenkpunkte N, Q des ersten und des zweiten Koppelgliedes 14a, 14b auf den Schwingen DE und BC optimiert eingestellt. So ist die Summe der Längen der Koppelglieder 14a, 14b, 14c kleiner als die Summe der Längen der Koppel CD und der Schwinge BC des ersten Getriebeteiles, wobei die Längen der einzelnen Glieder in folgender Reihenfolge abnehmen: Koppel CD (bzw. Basis AB) des ersten Gelenkvierecks (Gelenkparallelogramms) ABCD (größte Länge), erstes Koppelglied 14a, Schwinge BC (bzw. AD) des ersten Gelenkvierecks ABCD, zweites Koppelglied 14b, Strecke CQ auf der Schwinge BC des ersten Gelenkvierecks ABCD, Strecke OQ auf dem zweiten Koppelglied 14b, Schwinge CF (bzw. DE) des zweiten Gelenkvierecks (Gelenkparallelogramms) CDEF, Strecke EN (bzw. ND) auf der Schwinge DE des zweiten Gelenkvierecks CDEF, Strecke QB auf der Schwinge AB des ersten Gelenkvierecks ABCD, Strecke QT auf dem zweiten Koppelglied 14b, drittes Koppelglied 14c (kleinste Länge).

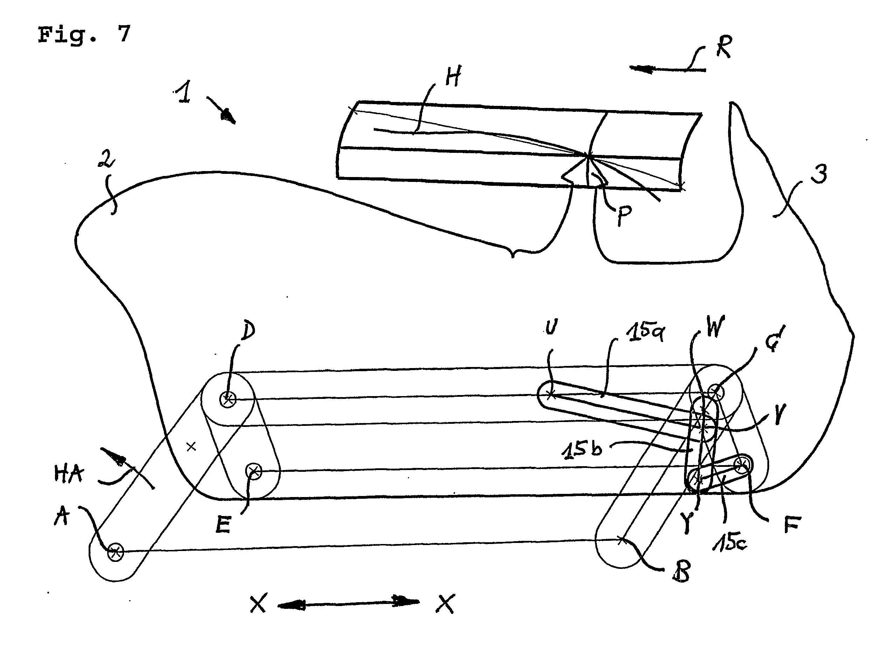

Das in Fig. 7 dargestellte siebente Ausführungsbeispiel der Erfindung kommt der sechsten Ausführung der Erfindung sehr nahe, insofern es keine Zahnräder aber zur zwangsläufigen kinematischen Kopplung des ersten und zweiten Getriebeteiles wiederum drei hebelartige, gelenkig miteinander verbundene Koppelglieder 15a, 15b, 15c aufweist. Das erste Koppelglied 15a ist dabei einendig an der Koppel CD des ersten Gelenkvierecks (Gelenkparallelogramms) ABCD bzw. Basis CD des zweiten Gelenkvierecks (Gelenkparallelogramms) CDEF angelenkt. Der Anlenkpunkt befindet sich in der rückenlehnenseitigen Hälfte der Strecke CD und ist in Fig. 7 mit U bezeichnet. Der anderendige Anlenkpunkt des ersten Koppelgliedes 15a am zweiten Koppelglied 15b wird durch das Bezugszeichen V angegeben und teilt die Gesamtlänge WY des zweiten Koppelgliedes 15b in zwei Teillängen VW, VY, die etwa im Verhältnis 1:3 zueinander stehen, ein endseitiger Anlenkpunkt des zweiten Koppelgliedes 15b an einer Schwinge BC des ersten Gelenkvierecks ABCD mit dem Bezugszeichen W und ein anderendiger Anlenkpunkt des zweiten Koppelgliedes 15b an einem Ende des dritten Koppelgliedes 15c mit dem Bezugszeichen Y. Das dritte Koppelglied 15c ist mit seinem anderen Ende im Gelenkpunkt F des zweiten Gelenkvierecks CDEF angelenkt.

Die siebente Ausführung der Erfindung hat gegenüber der sechsten Ausführung den Vorteil, daß die Längen der einzelnen Koppelglieder 15a, 15b, 15c (insgesamt) kürzer gewählt werden können als die Längen der Koppelglieder 14a, 14b, 14c der sechsten Ausführung, so daß die zwangsläufige kinematische Kopplung des ersten und zweiten Getriebeteiles materialsparender ausgeführt werden kann.

Der gewünschte Bewegungsablauf (Hüftpunktweg H) wird wiederum durch eine entsprechende Abstimmung der Längen der einzelnen Koppelglieder 15a, 15b 15c, aufeinander und auf die Längen der Basen, Schwingen und Koppeln der beiden Gelenkvierecke ABCD, CDEF sowie die Lage Anlenkpunkte U, W des ersten und des zweiten Koppelgliedes 14a, 14b auf der Koppel CD und der Schwinge BC des ersten Gelenkvierecks ABCD und die Lage des Anlenkpunktes V des ersten Koppelgliedes 15a auf dem zweiten Koppelglied 15b (Teillängen VW, VY) optimiert eingestellt. Wie bei der sechsten Ausführung können die einzelnen Längen- und Lageverhältnisse der Zeichnung maßstäblich entnommen werden.

Die Erfindung ist nicht auf das dargestellte und beschriebene Ausführungsbeispiel beschränkt, sondern umfaßt auch alle im Sinne der Erfindung gleichwirkenden Ausführungen, beispielsweise eine andere geometrische Abstimmung der einzelnen Getriebeteile aufeinander, als sich diese aus der Zeichnung ergibt. So können, wie bereits deutlich wurde, insbesondere durch ein Verändern der Neigung einzelner Glieder der Gelenkvierecke ABCD, CDEF zueinander in ihrer Anfangsstellung, z.B. aber auch der Basis AB des ersten Gelenkvierecks ABCD gegenüber der Fahrzeugbodenstruktur 4, oder auch durch eine Längenänderung z.B. der Koppel CD des ersten Gelenkvierecks ABCD, die gleichzeitig auch die Basis für das zweite Gelenkviereck CDEF darstellt, Punkte in Hüftpunktfeld S erreicht werden, die nicht auf der Linie des dargestellten Hüftpunktweges H liegen.

Zum Beispiel insbesondere bei der fünften und sechsten Ausführung der Erfindung können Punkte in Hüftpunktfeld S erreicht werden, die nicht auf der Linie des dargestellten Hüftpunktweges H liegen, indem die Koppelglieder 13, 14a teleskopierbar und somit gestuft oder stufenlos auf eine bestimmte gewünschte Länge einstellbar gestaltet werden.

Zum Beispiel insbesondere bei der siebenten Ausführung der Erfindung können Punkte in Hüftpunktfeld S erreicht werden, die nicht auf der Linie des dargestellten Hüftpunktweges H liegen, indem die Anlenkpunkte U, V des ersten Koppelgliedes 15a auf der Koppel CD des ersten Gelenkvierecks ABCD bzw. auf dem zweiten Koppelglied 15b gestuft oder stufenlos in unterschiedlichen Positionen fixierbar gestaltet werden. Dies kann wiederum beispielsweise mittels eines indexstiftes, durch Rastung oder eine andere formschlüssige Verbindung in verschiedenen diskreten Grundpositionen oder stufenlos durch Führung und Verklemmung oder Verschraubung von die Anlenkpunkte U, V definierenden Lagerzapfen in einer Nut der Koppel CD oder des Koppelgliedes 15b realisiert werden.

Wichtig ist jedoch, daß in jedem Fall die beschriebene zwangsläufige kinematische Kopplung erhalten bleibt, wobei darunter zu verstehen ist, daß die derart gekoppelten Glieder eindeutig einander zugeordnete Bewegungen ausführen.

## Patentansprüche

1. Vorrichtung zum Verstellen der Höhen- und Längsposition sowie der Neigung eines schwenkbaren Sitzteiles (2) eines Fahrzeugsitzes (1) relativ zu einer Bodenstruktur (4) des Fahrzeugs, mit einem Getriebe, das einen aus mindestens einem Gelenkviereck (ABCD) gebildeten Getriebeteil umfasst, der eine Basis (AB), zwei Schwingen (BC, AD) und eine Koppel (CD) aufweist, wobei die Basis (AB) in einer im wesentlichen zu einer Sitzlängsachse (X-X) parallel verlaufenden Ebene angeordnet ist und die Schwingen (BC, AD) um im wesentlichen parallel zu einer Sitzquerachse verlaufende Drehachsen verschwenkbar sind, **dadurch gekennzeichnet, dass** das Getriebe zwei jeweils aus mindestens einem Gelenkviereck (ABCD; CDEF) gebildete Getriebeteile umfasst, die jeweils eine Basis (AB; CD), zwei Schwingen (BC, AD; DE, CF) und eine Koppel (CD; EF) aufweisen, wobei die Basis (AB) des ersten Getriebeteiles gegenüber der Bodenstruktur (4) des Fahrzeugs festlegbar ist, die Koppel (CD) des ersten Getriebeteiles die Basis (CD) des zweiten Getriebeteiles bildet, die Koppel (EF) des zweiten Getriebeteiles gegenüber dem Sitzteil (2) festgelegt ist und eine Schwinge (DE, CF) des zweiten Getriebeteiles mit einer Schwinge (AD) des ersten Getriebeteiles zwangsläufig kinematisch gekoppelt ist, um den Hüftpunkt des Fahrzeuginsassen optimal zu positionieren.

2. Vorrichtung nach Anspruch 1,
**dadurch gekennzeichnet, daß** das Gelenkviereck (ABCD) des ersten Getriebeteiles ein Parallelogramm bildet.

3. Vorrichtung nach Anspruch 1 oder 2,
**dadurch gekennzeichnet, daß** das Gelenkviereck (CDEF) des zweiten Getriebeteiles ein Parallelogramm bildet.

4. Vorrichtung nach einem der Ansprüche 1 bis 3,
**dadurch gekennzeichnet, daß** das Gelenkviereck (ABCD) des ersten Getriebeteiles und das Gelenkviereck (CDEF) des zweiten Getriebeteiles im wesentlichen in einer Ebene liegen.

5. Vorrichtung nach einem der Ansprüche 1 bis 4,
**dadurch gekennzeichnet, daß** die Basis (AB) des ersten Getriebeteiles durch den Fahrzeugkörper, insbesondere durch die Bodenstruktur (4) des Fahrzeugs, gebildet ist.

6. Vorrichtung nach einem der Ansprüche 1 bis 5,
**dadurch gekennzeichnet, daß** der erste Getriebeteil und der zweite Getriebeteil jeweils zwei beidseitig des Sitzteiles (2) angeordnete Gelenkvierecke (ABCD; CDEF) umfassen, wobei die jeweiligen Schwingen (AD, BC; DE, CF) als beiderseits am Sitzteil (2) angeordnete Hebelpaare gebildet sind.

7. Vorrichtung nach einem der Ansprüche 1 bis 6,
**dadurch gekennzeichnet, daß** die Koppeln (CD) des ersten Getriebeteiles bzw. die Basen (CD) des zweiten Getriebeteiles jeweils durch beiderseits am Sitzteil (2) angeordnete Koppelstangen gebildet sind.

8. Vorrichtung nach einem der Ansprüche 1 bis 7,
**dadurch gekennzeichnet, daß** die zwangsläufige kinematische Kopplung der Schwinge (DE, CF) des zweiten Getriebeteiles mit der Schwinge (AD) des ersten Getriebeteiles über einen dritten Getriebeteil erfolgt.

9. Vorrichtung nach einem der Ansprüche 1 bis 8,
**dadurch gekennzeichnet, daß** das Getriebe einen dritten Getriebeteil umfaßt, der als Zahnradgetriebe ausgebildet ist.

10. Vorrichtung nach einem der Ansprüche 1 bis 9,
**dadurch gekennzeichnet, daß** das Getriebe einen dritten Getriebeteil umfaßt, der als ein Planetengetriebe mit paarweise miteinander kämmenden Zahnrädern (6, 7, 8, 9) oder zumindest Zahnradsegmenten ausgebildet ist, die durch einen umlaufenden Steg zusammengehalten werden, wobei der umlaufende Steg durch eine Schwinge (AD) des ersten Getriebeteiles gebildet ist.

11. Vorrichtung nach Anspruch 8 oder 9,
**dadurch gekennzeichnet, daß** der dritte Getriebeteil mindestens zwei Zahnräder (7, 8) oder zumindest Zahnradsegmente umfaßt, wobei eines der Zahnräder (8) als Ritzel, d.h. mit einem kleineren Durchmesser als das andere Zahnrad (7), ausgebildet ist, mit dem anderen Zahnrad (7) oder zumindest Zahnradsegment kämmt, und wobei das Ritzel auf der Koppel (CD) des ersten Gelenkvierecks (ABCD) und das andere Zahnrad (7) in einem gemeinsamen Gelenkpunkt (C) des ersten Gelenkvierecks (ABCD) und des zweiten Gelenkvierecks (CDEF) drehbeweglich fixiert ist und eine Schwinge (BC) des ersten Gelenkvierecks (ABCD) eine winkelhebelartige Verlängerung (CC1) aufweist, an deren Ende (C1) ein hebelartiges Koppelglied (13) angelenkt ist, das seinerseits anderendig in einem Gelenkpunkt (E) der Koppel (EF) des zweiten Gelenkvierecks (CDEF) angelenkt ist.

12. Vorrichtung nach Anspruch 10,
**dadurch gekennzeichnet, daß** der dritte Getriebeteil als offenes Außengetriebe ausgebildet ist.

13. Vorrichtung nach einem der Ansprüche 9 bis 12,
**dadurch gekennzeichnet, daß** die Zahnräder oder zumindest
Zahnradsegmente als Stimräder ausgeführt sind.

14. Vorrichtung nach einem der Ansprüche 8 bis 10,
**dadurch gekennzeichnet, daß** der dritte Getriebeteil mindestens drei Zahnräder (6, 7, 8) oder zumindest Zahnradsegmente umfaßt, wobei eines der Zahnräder (8) als Ritzel, d.h. mit einem kleineren Durchmesser als die übrigen Zahnräder (6, 7), ausgebildet ist und mit den beiden übrigen Zahnrädern (6, 7) oder zumindest Zahnradsegmenten kämmt.

15. Vorrichtung nach einem der Ansprüche 8 bis 10,
**dadurch gekennzeichnet, daß** der dritte Getriebeteil vier Zahnräder (6, 7, 8, 9) oder zumindest Zahnradsegmente umfaßt, wobei zwei Zahnräder (8, 9) unterschiedlicher Größe koaxial und drehfest zueinander angeordnet sind und jedes dieser beiden Zahnräder (8, 9) mit einem der beiden übrigen Zahnräder (6, 7) oder zumindest Zahnradsegmente kämmt.

16. Vorrichtung nach einem der Ansprüche 8 bis 15,
**dadurch gekennzeichnet, daß** die Drehachse eines Zahnrades (6, 7) oder zumindest Zahnsegmentes des dritten Getriebeteiles durch einen festgelegten Anlenkpunkt (A) und/oder einen beweglichen Anlenkpunkt (C) einer Schwinge (AD, BC) des ersten Getriebeteiles verläuft.

17. Vorrichtung nach einem der Ansprüche 9 bis 16,
**dadurch gekennzeichnet, daß** ein Zahnrad (6) oder zumindest Zahnsegment gegenüber der Bodenstruktur (4) des Fahrzeugs drehfest festgelegt ist.

18. Vorrichtung nach Anspruch 15,
**dadurch gekennzeichnet, daß** ein als Ritzel, d.h. mit einem kleineren Durchmesser als alle übrigen Zahnräder (6, 7, 9), ausgebildetes Zahnrad (8) mit einem Zahnrad (6) oder zumindest Zahnsegment des dritten Getriebeteiles kämmt und koaxial und drehfest zu einem anderen Zahnrad (9) angeordnet ist, welches seinerseits mit einem weiteren Zahnrad (7) oder zumindest Zahnsegment kämmt.

19. Vorrichtung nach einem der Ansprüche 9 bis 18,
**dadurch gekennzeichnet, daß** eines der Zahnräder, (6, 7, 8, 9) vorzugsweise das als Ritzel ausgebildete Zahnrad (8), über einen Drehantrieb antreibbar ist.

20. Vorrichtung nach einem der Ansprüche 14 bis 19,
**dadurch gekennzeichnet, daß** das als Ritzel ausgebildete Zahnrad (8) in einer Langlochführung (6a) am ersten Zahnrad (6) geführt ist.

21. Vorrichtung nach Anspruch 19 oder 20,
**dadurch gekennzeichnet, daß** der Drehantrieb als zentrisch auf die Drehachse des Ritzels aufgesetzter Schrittschaltmechanismus ausgebildet ist.

22. Vorrichtung nach Anspruch 19 oder 20,
**dadurch gekennzeichnet, daß** der Drehantrieb als auf die Drehachse des Zahnrads (6, 7, 8, 9) wirkender elektromotorischer Antrieb ausgebildet ist.

23. Vorrichtung nach einem der Ansprüche 1 bis 22,
**gekennzeichnet durch** einen Schwenkantrieb (HA) für eine Schwinge (AD) des ersten Getriebeteiles.

24. Vorrichtung nach einem der Ansprüche 9 bis 23,
**dadurch gekennzeichnet, daß** ein Zahnrad (7) des dritten Getriebeteiles über ein Mitnahme- und Führungsteil (7a) drehfest mit einer Schwinge (DE) des zweiten Getriebeteiles verbunden ist.

25. Vorrichtung nach Anspruch 24,
**dadurch gekennzeichnet, daß** das Mitnahme- und Führungsteil (7a) um einen Anlenkpunkt (D) einer Schwinge (DE) des zweiten Getriebeteils am zweiten Zahnrad (7) verschwenkbar und zumindest in verschiedenen Grundpositionen gegenüber dem drehfest mit der Schwinge (DE) des zweiten Getriebeteiles verbunden Zahnrad (7) festlegbar ist.

26. Vorrichtung nach Anspruch 24 oder 25,
**dadurch gekennzeichnet, daß** das Mitnahme- und Führungsteil (7a) mittels eines Indexstiftes, durch Rastung oder eine andere formschlüssige Verbindung in verschiedenen diskreten Grundpositionen gegenüber dem zweiten Zahnrad (7) festlegbar ist.

27. Vorrichtung nach Anspruch 24,
**dadurch gekennzeichnet, daß** das Mitnahme- und Führungsteil (7a) mittels eines handgeführten oder elektromotorischen Ritzelantriebs stufenlos gegenüber dem zweiten Zahnrad verstellbar und mittels einer Hemmeinrichtung festlegbar ist.

28. Vorrichtung nach einem der Ansprüche 1 bis 8,
**dadurch gekennzeichnet, daß** das Getriebe einen dritten Getriebeteil umfaßt, der mindestens ein hebelartiges Koppelglied (10, 11, 13, 14a, 14b, 14c, 15a, 15b, 15c) umfaßt.

29. Vorrichtung nach Anspruch 28,
**dadurch gekennzeichnet, daß** ein/das Koppelglied (10, 11) als Koppelstange (10, Gl) ausgebildet ist, die eine Schwinge (AD) des ersten Gelenkvierecks (ABCD) mit einer Schwinge (CF) des zweiten Gelenkvierecks (CDEF) verbindet.

30. Vorrichtung nach Anspruch 28,
**dadurch gekennzeichnet, daß** ein/das Koppelglied (10, 11) als Schwinge ausgebildet ist, die die Basis (AB) des ersten Gelenkvierecks (ABCD) mit der Basis (CD) des zweiten Gelenkvierecks (CDEF) verbindet.

31. Vorrichtung nach Anspruch 30,
**dadurch gekennzeichnet, daß** die Schwinge (11, JK) eine Kulisse (12) aufweist, die einerseits auf der Schwinge (11, JK) in deren Längsrichtung bewegbar ist und andererseits mit der Koppel (EF) des zweiten Gelenkvierecks (CDEF) drehbar um mindestens einen Lagerpunkt (L) verbindbar ist.

32. Vorrichtung nach einem der Ansprüche 1 bis 8,
**dadurch gekennzeichnet, daß** das Getriebe einen dritten Getriebeteil umfaßt, der drei hebelartige, gelenkig miteinander verbundene Koppelglieder (14a, 14b, 14c; 15a, 15b, 15c) umfaßt.

33. Vorrichtung nach Anspruch 28 oder 32,
**dadurch gekennzeichnet, daß** zumindest eines der Koppelglieder (13, 14a) teleskopierbar, d.h. auf eine bestimmte Länge einstellbar ist.

34. Vorrichtung nach Anspruch 32 oder 33,
**dadurch gekennzeichnet, daß** zumindest eines der Koppelglieder (13, 14a, 15c) an einer Schwinge (DE, CF) des zweiten Gelenkvierecks (CDEF) drehbeweglich angelenkt ist.

35. Vorrichtung nach einem der Anspruch 32 bis 34,
**dadurch gekennzeichnet, daß** zumindest eines der Koppelglieder (13, 14b, 14c, 15b) an einer Schwinge (BC) des ersten Gelenkvierecks (ABCD) drehbeweglich angelenkt ist.

36. Vorrichtung nach einem der Ansprüche 32 bis 35,
**dadurch gekennzeichnet, daß** zumindest eines der Koppelglieder (13, 14c, 15c) in einem Gelenkpunkt (E, B, F) des ersten Gelenkvierecks (ABCD) oder des zweiten Gelenkvierecks (CDEF) drehbeweglich angelenkt ist.

37. Vorrichtung nach einem der Ansprüche 32 bis 36,
**dadurch gekennzeichnet, daß** zumindest eines der Koppelglieder (15a) in einem Gelenkpunkt (U) auf der Koppel (CD) des ersten Gelenkvierecks (ABCD) drehbeweglich angelenkt ist.

38. Vorrichtung nach einem der Ansprüche 32 bis 37,
**dadurch gekennzeichnet, daß** zumindest ein Anlenkpunkt (U, V) eines der Koppelglieder (15a) in verschiedenen diskreten oder ungestuften Grundpositionen gegenüber mindestens einem Glied (CD) mindestens eines Gelenkvierecks (ABCD, CDEF) oder gegenüber mindestens einem weiteren Koppelglied (15b) festlegbar ist.

39. Vorrichtung nach einem der Ansprüche 1 bis 38,
**dadurch gekennzeichnet, daß** das Getriebe derart ausgebildet ist, daß alle Punkte auf dem gegenüber der Koppel (EF) des zweiten Getriebeteiles festgelegten Sitzteil (2) im Querschnitt gesehen bei einem Verstellen des ersten Getriebeteiles, insbesondere bei einem Verschwenken einer ersten Schwinge (AD) des ersten Getriebeteiles, eine einteilige, geschlossene, vorzugsweise schleifenfreie, Koppelpunktbahn ausführen.

40. Vorrichtung nach einem der Ansprüche 1 bis 39,
**dadurch gekennzeichnet, daß** das Getriebe derart ausgebildet ist, daß alle Punkte auf dem gegenüber der Koppel (EF) des zweiten Getriebeteiles festgelegten Sitzteil (2) - im Querschnitt gesehen - bei einem Verstellen des ersten Getriebeteiles, insbesondere bei einem Verschwenken einer ersten Schwinge (AD) des ersten Getriebeteiles, eine Koppelpunktbahn von mindestens 200 mm Länge ausführen.

41. Vorrichtung nach einem der Ansprüche 1 bis 40,
**dadurch gekennzeichnet, daß** das Getriebe derart ausgebildet ist, daß alle Punkte auf dem gegenüber der Koppel (EF) des zweiten Getriebeteiles festgelegten Sitzteil (2) - im Querschnitt gesehen - bei einem Verstellen des ersten Getriebeteiles, insbesondere bei einem Verschwenken einer ersten Schwinge (AD) des ersten Getriebeteiles parallel zu einer Sitzlängsachse (X-X) eine in Blickrichtung (R) eines Sitzbenutzers ansteigende Koppelpunktbahn ausführen.

42. Fahrzeugsitz, insbesondere Kraftfahrzeugsitz (1), mit einer Vorrichtung zum Verstellen der Höhen- und Längsposition sowie der Neigung eines schwenkbaren Sitzteiles (2) relativ zu einer Bodenstruktur (4) nach einem der Ansprüche 1 bis 34.

43. Fahrzeugsitz nach Anspruch 42,
**dadurch gekennzeichnet, daß** das Sitzteil (2) mit einer schwenkbar zum Sitzteil (2) angeordneten Rücklehne (3) verbunden ist.

## Claims

1. Device for adjusting, the vertical and longitudinal position, as well as the tilt, of a pivotable seat part (2) of a vehicle seat (1) relative to a floor structure (4) of the vehicle, having a gear mechanism, which comprises a transmission part, which is formed from at least one four-bar linkage (ABCD) and has a base (AB), two links (BC, AD) and a coupler (CD), the base (AB) being disposed in a plane running substantially parallel to a seat longitudinal axis (X-X) and the oscillating links (BC, AD) being pivotable about rotation axes running substantially parallel to a seat transverse axis, **characterized in that** the gear mechanism comprises two transmission parts, which are respectively formed from at least one four-bar linkage (ABCD; CDEF) and which respectively have a base (AB; CD), two links (BC, AD; DE, CF) and a coupler (CD; EF), wherein the base (AB) of the first transmission part can be fixed relative to the floor structure (4) of the vehicle, the coupler (CD) of the first transmission part forms the base (CD) of the second transmission part, the coupler (EF) of the second transmission part is fixed relative to the seat part (2), and a link (DE, CF) of the second transmission part is forcibly kinematically coupled to a link (AD) of the first transmission part, in order to optimally position the hip point of the vehicle passenger.

2. Device according to Claim 1, **characterized in that** the four-bar linkage (ABCD) of the first transmission part forms a parallelogram.

3. Device according to Claim 1 or 2, **characterized in that** the four-bar linkage (CDEF) of the second transmission part forms a parallelogram.

4. Device according to one of Claims 1 to 3, **characterized in that** the four-bar linkage (ABCD) of the first transmission part and the four-bar linkage (CDEF) of the second transmission part lie substantially in one plane.

5. Device according to one of Claims 1 to 4, **characterized in that** the base (AB) of the first transmission part is formed by the vehicle body, in particular by the floor structure (4) of the vehicle.

6. Device according to one of Claims 1 to 5, **characterized in that** the first transmission part and the second transmission part respectively comprise two four-bar linkages (ABCD; CDEF) disposed.on either side of the seat part (2), the respective links (AD, BC; DE, CF) being formed as lever pairs disposed on either side of the seat part (2).

7. Device according to one of Claims 1 to 6, **characterized in that** the couplers (CD) of the first transmission part and the bases (CD) of the second transmission part are respectively formed by connecting rods disposed on either side of the seat part (2).

8. Device according to one of Claims 1 to 7, **characterized in that** the forced kinematic coupling of the link (DE, CF) of the second transmission part to the link (AD) of the first transmission part is realized via a third transmission part.

9. Device according to one of Claims 1 to 8, **characterized in that** the gear mechanism comprises a third transmission part, which is configured as a toothed gearing.

10. Device according to one of Claims 1 to 9, **characterized in that** the gear mechanism comprises a third transmission part, which is configured as a planetary gearing having gears (6, 7, 8, 9), or at least gear segments, which intermesh in pairs and are held together by a circumferential web, the circumferential web being formed by an oscillating link (AD) of the first transmission part.

11. Device according to Claim 8 or 9, **characterized in that** the third transmission part comprises at least two gears (7, 8), or at least gear segments, wherein one of the gears (8) is configured as a pinion, i.e. with a smaller diameter than the other gear (7), and meshes with the other gear (7), or at least gear segment, and wherein the pinion is fixed in a rotationally movable manner on the coupler (CD) of the first four-bar linkage (ABCD)., and the other gear (7) is fixed in a rotationally movable manner in a common pivot point (C) of the first four-bar linkage (ABCD) and of the second four-bar linkage (CDEF), and a link (BC) of the first four-bar linkage (ABCD) has an elbow-lever-like extension (CC1), to whose end (C1) a lever-like coupler element (13) is articulately attached, which, for its part, is articulated at the other end in a hinge point (E) of the coupler (EF) of the second four-bar linkage (CDEF).

12. Device according to Claim 10, **characterized in that** the third transmission part is configured as an open external gear mechanism.

13. Device according to one of Claims 9 to 12, **characterized in that** the gears, or at least gear segments, are configured as spur gears.

14. Device according to one of Claims 8 to 10, **characterized in that** the third transmission part comprises at least three gears (6, 7, 8), or at least gear segments, wherein one of the gears (8) is configured as a pinion, i.e. with a smaller diameter than the other gears (6, 7), and meshes with the two other gears (6, 7), or at least gear segments.

15. Device according to one of Claims 8 to 10, **characterized in that** the third transmission part comprises four gears (6, 7, 8, 9), or at least gear segments, wherein two different-sized gears (8, 9) are disposed coaxially and in a rotationally secure manner with respect to one another, and each of these two gears (8, 9) mesh with one of the two other gears (6, 7), or at least gear segments.

16. Device according to one of Claims 8 to 15, **characterized in that** the rotation axis of a gear (6, 7), or at least gear segment, of the third transmission part runs through a fixed pivot point (A) and/or a movable pivot point (C) of a link (AD, BC) of the first transmission part.

17. Device according to one of Claims 9 to 16, **characterized in that** a gear (6), or at least a gear segment, is fixed in a rotationally secure manner relative to the floor structure (4) of the vehicle.

18. Device according to Claim 15, **characterized in that** a gear (8) configured as a pinion, i.e. with a smaller diameter than all the other gears (6, 7, 9), meshes with a gear (6), or at least a gear segment, of the third transmission part and is disposed coaxially and in a rotationally secure manner with respect to another gear (9), which, for its part, meshes with a further gear (7), or at least gear segment.

19. Device according to one of Claims 9 to 18, **characterized in that** one of the gears (6, 7, 8, 9), preferably the gear (8) configured as a pinion, can be driven by means of a rotary drive.

20. Device according to one of Claims 14 to 19, **characterized in that** the gear (8) configured as a pinion is guided in a slotted guide (6a) on the first gear (6).

21. Device according to Claim 19 or 20, **characterized in that** the rotary drive is configured as a stepping mechanism mounted centrically on the rotation axis of the pinion.

22. Device according to Claim 19 or 20, **characterized in that** the rotary drive is configured as an electromotive drive acting upon the rotation axis of the gear (6, 7, 8, 9).

23. Device according to one of Claims 1 to 22, **characterized by** a pivot drive (HA) for a link (AD) of the first transmission part.

24. Device according to one of Claims 9 to 23, **characterized in that** a gear (7) of the third transmission part is connected by a driving and guiding part (7a) in a rotationally secure manner to a link (DE) of the second transmission part.

25. Device according to Claim 24, **characterized in that** the driving and guiding part (7a) is pivotable about a pivot point (D) of a link (DE) of the second transmission part on the second gear (7) and, at least in various basic positions, can be fixed relative to the gear (7) connected in a rotationally secure manner to the link (DE) of the second transmission part.

26. Device according to Claim 24 or 25, **characterized in that** the driving and guiding part (7a) can be fixed by means of an indexing pin, by latching or some other positive-locking connection, in various separate basic positions relative to the second gear (7).

27. Device according to Claim 24, **characterized in that** the driving and guiding part (7a) can be infinitely adjusted relative to the second gear by means of a manually operated or electromotive pinion drive and can be fixed by means of a stop mechanism.

28. Device according to one of Claims 1 to 8, **characterized in that** the gear mechanism comprises a third transmission part, which comprises at least one lever-like coupler element (10, 11, 13, 14a, 14b, 14c, 15a, 15b, 15c).

29. Device according to Claim 28, **characterized in that** a/the coupler element (10, 11) is configured as a connecting rod (10, GI), which connects a link (AD) of the first four-bar linkage (ABCD) to a link (CF) of the second four-bar linkage (CDEF).

30. Device according to Claim 28, **characterized in that** a/the coupler element (10, 11) is configured as a link, which connects the base (AB) of the first four-bar linkage (ABCD) to the base (CD) of the second four-bar linkage (CDEF).

31. Device according to Claim 30, **characterized in that** the link (11, JK) has a connecting member (12), which, on the one hand, can be moved on the link (11, JK) in the longitudinal direction thereof and, on the other hand, can be connected to the coupler (EF) of the second four-bar linkage (CDEF) such that it is rotatable about at least one bearing point (L).

32. Device according to one of Claims 1 to 8, **characterized in that** the gear mechanism comprises a third transmission part, which comprises three lever-like, hinge-connected coupler elements (14a, 14b, 14c; 15a, 15b, 15c).

33. Device according to Claim 28 or 32, **characterized in that** at least one of the coupler elements (13, 14a) is telescopic, i.e. can be adjusted to a specific length.

34. Device according to Claim 32 or 33, **characterized in that** at least one of the coupler elements (13, 14a, 15c) is articulately attached in a rotationally movable manner to an oscillating link (DE, CF) of the second four-bar linkage (CDEF).

35. Device according to one of Claims 32 to 34, **characterized in that** at least one of the coupler elements (13, 14b, 14c, 15b) is articulately attached in a rotationally movable manner to a link (BC) of the first four-bar linkage (ABCD).

36. Device according to one of Claims 32 to 35, **characterized in that** at least one of the coupler elements (13, 14c, 15c) is articulated in a rotationally movable manner in a pivot point (E, B, F) of the first four-bar linkage (ABCD) or of the second four-bar linkage (CDEF).

37. Device according to one of Claims 32 to 36, **characterized in that** at least one of the coupler elements (15a) is articulated in a rotationally movable manner in a pivot point (U) on the coupler (CD) of the first four-bar linkage (ABCD).

38. Device according to one of Claims 32 to 37, **characterized in that** at least one pivot point (U, V) of one of the coupler elements (15a) can be fixed in various separate or ungraduated basic positions relative to at least one element (CD) of at least one four-bar linkage (ABCD, CDEF) or relative to at least one further coupler element (15b).

39. Device according to one of Claims 1 to 38, **characterized in that** the gear mechanism is configured such that all points on the fixed seat part (2) relative to the coupler (EF) of the second transmission part - viewed in cross section - upon an adjustment of the first transmission part, in particular upon a pivoting of a first link (AD) of the first transmission part, complete an integral, closed, preferably loop-free, coupler point path.

40. Device according to one of Claims 1 to 39, **characterized in that** the gear mechanism is configured such that all points on the fixed seat part (2) relative to the coupler (EF) of the second transmission part - viewed in cross section - upon an adjustment of the first transmission part, in particular upon a pivoting of a first link (AD) of the first transmission part, complete a coupler point path of at least 200 mm in length.

41. Device according to one of Claims 1 to 40, **characterized in that** the gear mechanism is configured such that all points on the fixed seat part (2) relative to the coupler (EF) of the second transmission part - viewed in cross section - upon an adjustment of the first transmission part, in particular upon a pivoting of a first link (AD) of the first transmission part, complete parallel to a seat longitudinal axis (X-X) a coupler point path which is ascending in the direction of view (R) of an occupant of the seat.

42. Vehicle seat, in particular a motor vehicle seat (1), having a device for adjusting the vertical and longitudinal position, as well as the tilt, of a pivotable seat part (2) relative to a floor structure (4), according to one of Claims 1 to 34.

43. Vehicle seat according to Claim 42, **characterized in that** the seat part (2) is connected to a backrest (3) disposed pivotably with respect to the seat part (2).

## Revendications

1. Dispositif d'ajustement de la position en hauteur et en longueur ainsi que de l'inclinaison d'une partie pivotante (2) du siège (1) d'un véhicule par rapport à la structure de châssis (4) du véhicule, lequel dispositif présente une transmission qui comporte une partie de transmission formée d'au moins un quadrilatère articulé (ABCD) qui présente une base (AB), deux manivelles (BC, AD) et une bielle (CD), la base (AB) étant disposée dans un plan essentiellement parallèle à l'axe longitudinal (X-X) du siège et les manivelles (BC, AD) pouvant pivoter autour d'axes de pivotement essentiellement parallèles à l'axe transversal du siège, **caractérisé en ce que** la transmission comporte deux parties de transmission toutes deux formées d'au moins un quadrilatère articulé (ABCD; CDEF) qui présentent chacun une base (AB; CD), deux manivelles (BC, AD; DE, CF) et une bielle (CD; EF), la base (AB) de la première partie de la transmission pouvant être fixée par rapport à la structure de châssis (4) du véhicule, la bielle (CD) de la première partie de transmission formant la base (CD) de la deuxième partie de la transmission, la bielle (EF) de la deuxième partie de la transmission étant fixe par rapport à la partie (2) du siège et une manivelle (DE, CF) de la deuxième partie de transmission étant accouplée cinématiquement de manière forcée à une manivelle (AD) de la première partie de la transmission, pour positionner de manière optimale la hanche du passager du véhicule.

2. Dispositif selon la revendication 1, **caractérisé en ce que** le quadrilatère articulé (ABCD) de la première partie de la transmission forme un parallélogramme .

3. Dispositif selon les revendications 1 ou 2, **caractérisé en ce que** le quadrilatère articulé (CDEF) de la deuxième partie de la transmission forme un parallélogramme.

4. Dispositif selon l'une des revendications 1 à 3, **caractérisé en ce que** le quadrilatère articulé (ABCD) de la première partie de la transmission et le quadrilatère articulé (CDEF) de la deuxième partie de la transmission sont situés essentiellement dans le même plan.

5. Dispositif selon l'une des revendications 1 à 4, **caractérisé en ce que** la base (AB) de la première partie de la transmission est formée par le corps du véhicule et en particulier par la structure de châssis (4) du véhicule.

6. Dispositif selon l'une des revendications 1 à 5, **caractérisé en ce que** la première partie de la transmission et la deuxième partie de la transmission comprennent toutes deux des quadrilatères articulés (ABCD; CDEF) disposés des deux côtés de la partie (2) du siège, les manivelles respectives (AD, BC; DE, CF) étant formées sous la forme de paires de leviers disposés des deux côtés de la partie (2) du siège.

7. Dispositif selon l'une des revendications 1 à 6, **caractérisé en ce que** la bielle (CD) de la première partie de la transmission et la base (CD) de la deuxième partie de la transmission sont toutes deux formées par des tiges de bielle disposées des deux côtés de la partie (2) du siège.

8. Dispositif selon l'une des revendications 1 à 7, **caractérisé en ce que** l'accouplement cinématique forcé des manivelles (DE; CF) de la deuxième partie de la transmission à la manivelle (AD) de la première partie de la transmission s'effectue par l'intermédiaire d'une troisième partie de transmission.

9. Dispositif selon l'une des revendications 1 à 8, **caractérisé en ce que** la transmission comporte une troisième partie de transmission configurée comme transmission à roues dentées.

10. Dispositif selon l'une des revendications 1 à 9, **caractérisé en ce que** la transmission comporte une troisième partie de transmission configurée comme transmission à planétaire dotée de roues dentées (6, 7, 8, 9) ou d'au moins de segments de roues dentées qui s'engagent mutuellement par paires maintenues ensemble par une traverse périphérique, la traverse périphérique étant formée par une manivelle (AD) de la première partie de la transmission.

11. Dispositif selon les revendications 8 ou 9, **caractérisé en ce que** la troisième partie de la transmission comporte au moins deux roues dentées (7, 8) ou au moins segments de roue dentée, l'une des roues dentées (8) étant configurée comme pignon, c'est-à-dire présente un diamètre plus petit que celui de l'autre roue dentée (7) qui s'engage sur l'autre roue dentée (7) ou au moins segment de roue dentée, le pignon prévu sur la bielle (CD) du premier quadrilatère articulé (ABCD) et l'autre roue dentée (7) étant fixés à rotation en un point d'articulation commun (C) du premier quadrilatère articulé (ABCD) et du deuxième quadrilatère articulé (CDEF), une manivelle (BC) du premier quadrilatère articulé (ABCD) présentant un prolongement (CC1) en forme de levier coudé à l'extrémité (C1) duquel est articulé un organe d'accouplement (13) en forme de levier dont l'autre extrémité est articulée en un point d'articulation (E) de la bielle (EF) du deuxième quadrilatère articulé (CDEF).

12. Dispositif selon la revendication 10, **caractérisé en ce que** la troisième partie de la transmission est configurée comme transmission extérieure ouverte.

13. Dispositif selon l'une des revendications 9 à 12, **caractérisé en ce que** les roues dentées ou au moins segments de roue dentée sont configurés comme pignons droits.

14. Dispositif selon l'une des revendications 8 à 10, **caractérisé en ce que** la troisième partie de la transmission comporte au moins trois roues dentées (6, 7, 8) ou au moins segments de roue dentée, l'une des roues dentées (8) étant configurée comme pignon, c'est-à-dire avec un diamètre plus petit que les autres roues dentées (6, 7), et s'engageant sur les deux autres roues dentées (6, 7) ou au moins segments de roue dentée.

15. Dispositif selon l'une des revendications 8 à 10, **caractérisé en ce que** la troisième partie de la transmission comporte quatre roues dentées (6, 7, 8, 9) ou au moins segments de roue dentée, deux roues dentées (8, 9) de tailles différentes étant disposées coaxialement et à rotation solidaire et chacune de ces deux roues dentées (8, 9) s'engageant sur une des deux autres roues dentées (6, 7) ou au moins segments de roues dentées.

16. Dispositif selon l'une des revendications 8 à 15, **caractérisé en ce que** l'axe de rotation d'une roue dentée (6, 7) ou au moins segment de roue dentée de la troisième partie de la transmission passe par un point d'articulation fixe (A) et/ou par un point d'articulation mobile (C) d'une manivelle (AD, BC) de la première partie de la transmission.

17. Dispositif selon l'une des revendications 9 à 16, **caractérisé en ce qu'**une roue dentée (6) ou au moins segment de roue dentée est fixée à rotation solidaire par rapport à la structure (4) du châssis du véhicule.

18. Dispositif selon la revendication 15, **caractérisé en ce qu'**un pignon, c'est-à-dire une roue dentée (8) dont le diamètre est plus petit que celui de toutes les autres roues dentées (6, 7, 9), s'engage sur une roue dentée (6) ou au moins segment de roue dentée de la troisième partie de transmission et est disposé coaxialement et à rotation solidaire par rapport à une autre roue dentée (9) qui s'engage pour sa part sur une autre roue dentée (7) ou au moins segment de roue dentée.

19. Dispositif selon l'une des revendications 9 à 18, **caractérisé en ce que** l'une des roues dentées (6, 7, 8, 9), de préférence la roue dentée (8) configurée comme pignon, peut être entraînée par un entraînement en rotation.

20. Dispositif selon l'une des revendications 14 à 19, **caractérisé en ce que** la roue dentée (8) configurée comme pignon est guidée dans un guide (6a) en forme de trou oblong ménagé sur la première roue dentée (6).

21. Dispositif selon les revendications 19 à 20, **caractérisé en ce que** l'entraînement en rotation est configuré comme mécanisme à roue d'avancement pas à pas placé sur l'axe de rotation du pignon.

22. Dispositif selon les revendications 19 ou 20, **caractérisé en ce que** l'entraînement en rotation est configuré comme entraînement par moteur électrique qui agit sur l'axe de rotation de la roue dentée (6, 7, 8, 9).

23. Dispositif selon l'une des revendications 1 à 22, **caractérisé par** un entraînement en pivotement (HA) pour une manivelle (AD) de la première partie de la transmission.

24. Dispositif selon l'une des revendications 9 à 23, **caractérisé en ce qu'**une roue dentée (7) de la troisième partie de la transmission est reliée à rotation solidaire à une manivelle (DE) de la deuxième partie de la transmission par l'intermédiaire d'une partie d'entraînement et de guidage (7a).

25. Dispositif selon la revendication 24, **caractérisé en ce que** la partie (7a) d'entraînement et de guidage peut être fixée sur la deuxième roue dentée (7) à pivotement autour d'un point d'articulation (D) d'une manivelle (DE) de la deuxième partie de la transmission et peut être fixée en au moins deux positions de base différentes par rapport à la roue dentée (7) reliée à rotation solidaire à la manivelle (DE) de la deuxième partie de la transmission.

26. Dispositif selon les revendications 24 ou 25, **caractérisé en ce que** la partie (7a) d'entraînement et de guidage peut être fixée en différentes positions de base distinctes par rapport à la deuxième roue dentée (7) au moyen d'une tige d'indexation, par encliquetage ou par une autre liaison en correspondance géométrique.

27. Dispositif selon la revendication 24, **caractérisé en ce que** la partie (7a) d'entraînement et de guidage peut être ajustée de manière progressive par rapport à la deuxième roue dentée au moyen d'un entraînement à pignon manuel ou par moteur électrique et peut être bloquée au moyen d'un dispositif de blocage.

28. Dispositif selon l'une des revendications 1 à 8, **caractérisé en ce que** la transmission comprend une troisième partie de transmission qui comporte au moins un organe d'accouplement (10, 11, 13, 14a, 14b, 14c, 15a, 15b, 15c) en forme de levier.

29. Dispositif selon la revendication 28, **caractérisé en ce qu'**un organe d'accouplement ou l'organe (10, 11) est configuré comme tringle d'accouplement (10, GI) qui relie une manivelle (AD) du premier quadrilatère articulé (ABCD) à une manivelle (CF) du deuxième quadrilatère articulé (CDEF).

30. Dispositif selon la revendication 28, **caractérisé en ce qu'**un ou l'organe d'accouplement (10, 11) est configuré comme manivelle qui relie la base (AB) du premier quadrilatère articulé (ABCD) à la base (CD) du deuxième quadrilatère articulé (CDEF).

31. Dispositif selon la revendication 30, **caractérisé en ce que** la manivelle (11, JK) présente une glissière (12) qui d'une part peut se déplacer sur la manivelle (11, JK) dans le sens de sa longueur et d'autre part peut être reliée à rotation à la bielle (EF) du deuxième quadrilatère articulé (CDEF) autour d'au moins un point de montage (L).

32. Dispositif selon l'une des revendications 1 à 8, **caractérisé en ce que** la transmission comporte une troisième partie de transmission qui comprend trois organes d'accouplement (14a, 14b, 14c; 15a, 15b, 15c) en forme de levier reliés les uns aux autres de manière articulée.

33. Dispositif selon les revendications 28 ou 32, **caractérisé en ce qu'**au moins l'un des organes d'accouplement (13, 14a) est télescopique, c'est-à-dire peut être ajusté à une longueur donnée.

34. Dispositif selon les revendications 32 ou 33, **caractérisé en ce qu'**au moins l'un des organes d'accouplement (13, 14a, 15c) est articulé de manière à pouvoir tourner sur une manivelle (DE, CF) du deuxième quadrilatère articulé (CDEF).

35. Dispositif selon l'une des revendications 32 à 34, **caractérisé en ce qu'**au moins l'un des organes d'accouplement (13, 14b, 14c, 15b) est articulé de manière à pouvoir tourner sur une manivelle (BC) du premier quadrilatère articulé (ABCD).

36. Dispositif selon l'une des revendications 32 à 35, **caractérisé en ce qu'**au moins l'un des organes d'accouplement (13, 14c, 15c) est articulé d'une manière à pouvoir tourner sur un point d'articulation (E, B, F) du premier quadrilatère articulé (ABCD) ou du deuxième quadrilatère articulé (CDEF).

37. Dispositif selon l'une des revendications 32 à 36, **caractérisé en ce qu'**au moins un des organes d'accouplement (15a) est articulé de manière à pouvoir tourner sur un point d'articulation (U) de la bielle (CD) du premier quadrilatère arti-culé (ABCD).

38. Dispositif selon l'une des revendications 32 à 37, **caractérisé en ce qu'**au moins un point d'articulation (U, V) de l'un des organes d'accouplement (15a) peut être fixé en différentes positions de base distinctes ou continues par rapport à au moins un organe (CD) d'au moins un quadrilatère articulé (ABCD, CDEF) ou par rapport à au moins un autre organe d'accouplement (15b).

39. Dispositif selon l'une des revendications 1 à 38, **caractérisé en ce que** la transmission est configurée de telle sorte que, lors d'un ajustement de la première partie de la transmission et en particulier lors du pivotement d'une première manivelle (AD) de la première partie de la transmission, tous les points situés sur la partie (2) du siège fixée par rapport à la bielle (EF) de la deuxième partie de la transmission suivent vus en coupe transversale un parcours de points d'accouplement en une seule pièce, fermé et de préférence sans boucle.

40. Dispositif selon l'une des revendications 1 à 39, **caractérisé en ce que** la transmission est configurée de telle sorte que lors d'un ajustement de la première partie de la transmission et en particulier lors du pivotement d'une première manivelle (AD) de la première partie de la transmission, tous les points de la partie (2) du siège fixée sur la bielle (EF) de la deuxième partie de la transmission suivent vus en coupe transversale un parcours de point d'accouplement d'une longueur d'au moins 200 mm.

41. Dispositif selon l'une des revendications 1 à 40, **caractérisé en ce que** la transmission est configurée de telle sorte que, lors d'un ajustement de la première partie de la transmission et en particulier lors du pivotement d'une première manivelle (AD) de la première partie de la transmission parallèlement à l'axe longitudinal (X-X) du siège, tous les points situés sur la partie (2) du siège fixée sur la bielle (EF) de la deuxième partie de la transmission suivent vus en coupe transversale un parcours de points d'accouplement qui remonte dans la direction (R) du regard de l'utilisateur du siège.

42. Siège de véhicule, en particulier siège (1) de véhicule automobile, doté d'un dispositif d'ajustement de la position en hauteur et en longueur ainsi que de l'inclinaison d'une partie (2) pivotante du siège par rapport à la structure de châssis (4) selon l'une des revendications 1 à 34.

43. Siège de véhicule selon la revendication 42, **caractérisé en ce que** la partie (2) du siège est reliée à un dossier (3) disposé de manière à pouvoir pivoter par rapport à la partie (2) du siège.
